Europäisches Patentamt

European Patent Office

Office européen des brevets

(11) Veröffentlichungsnummer: **0 203 264 B1**

# EUROPÄISCHE PATENTSCHRIFT

(45) Veröffentlichungstag der Patentschrift: 17.07.91

(51) Int. Cl.⁵: **H02G 3/06**

(21) Anmeldenummer: 86101945.3

(22) Anmeldetag: 15.02.86

(54) **Kabelverschraubung mit einem geschlitzten Klemmeinsatz, dessen Schlitze im Querschnitt schräg verlaufen.**

(30) Priorität: 25.05.85 DE 3519031

(43) Veröffentlichungstag der Anmeldung:
03.12.86 Patentblatt 86/49

(45) Bekanntmachung des Hinweises auf die
Patenterteilung:
17.07.91 Patentblatt 91/29

(84) Benannte Vertragsstaaten:
CH DE FR IT LI

(56) Entgegenhaltungen:
DE-A- 1 750 095          DE-A- 2 348 882
DE-A- 3 512 578          DE-C- 1 286 173
DE-U- 8 415 525          FR-A- 2 358 766
GB-A- 576 862            US-A- 2 424 067
US-A- 4 323 727

(73) Patentinhaber: **Anton Hummel GmbH Metallwarenfabrik
Mozartstrasse 2 - 5
W-7808 Waldkirch(DE)**

(72) Erfinder: **Gehring, Peter
Eichhofweg
W-7809 Simonswald-Griesbach(DE)**

(74) Vertreter: **Schmitt, Hans, Dipl.-Ing. et al
Patentanwälte Dipl.-Ing H. Schmitt Dipl.-Ing.
W. Maucher Dreikönigstrasse 13
W-7800 Freiburg(DE)**

## Beschreibung

Die Erfindung betrifft eine Kabelverschraubung mit einer Schraubhülse, mit einer mit ihr verschraubbaren Gegenhülse und mit einem damit oder dadurch gegen das Kabel oder einen Schutzschlauch preßbaren geschlitzten Klemmeinsatz, wobei die Gegenhülse od. dgl. den Klemmeinsatz außen Vorzugsweise mit einer Ringfläche zumindest an der Stirnseite übergreift und beim Anziehen des Gewindes vorzugsweise mit einer sich verjüngenden Form z. B. mittels eines Konus, einen mit axialen, an der Stirnseite mündenden Schlitzen versehenen Bereich des Klemmeinsatzes radial gegen das Kabel hin verformt, das Kabel so festlegt und mittelbar oder unmittelbar abdichtet, wobei die sich axial erstreckenden Schlitze im Querschnitt gesehen schräg zum Radius des Klemmeinsatzes bzw. des erfaßten Kabels verlaufen.

Eine derartige Kabelverschraubung ist aus DE-GM 8415 525 bekannt. Dabei haben die meisten Schlitze des Klemmeinsatzes eine im Querschnitt übereinstimmende Schräge relativ zu dem jeweiligen Radius, während z. B. drei Schlitze am Umfang verteilt gegenläufig zu diesen Schrägungsrichtungen eine entgegengesetzte Schräge haben. Dadurch entstehen im Bereich dieser gegensinnigen schrägen Schlitze Abschnitte oder Klemmfinger, die bei einer radialen Verformung aufgrund der gegensinnigen Schrägflächen radial nach innen verformt werden, während alle übrigen Klemmfinger radial nach außen gedrückt werden. Dadurch entsteht ein Querschnitt mit einer Dreikantform und am Umfang einer Kabelschraubung eine ungleichmäßige und im wesentlichen unrunde Beanspruchung, die eine Abdichtung besonders am Kabel erschwert und den Klemmbereich des Kabels oder einer zwischengelegten Dichtung ungleichmäßig beansprucht.

Diese mit gegensinnigen Schrägflächen versehenen Abschnitte oder Klemmfinger haben dabei den Zweck, daß bei stärkster Zusammenpressung des Klemmeinsatzes, wenn also alle übrigen Abschnitte sich zum kleinstmöglichen Ring zusammengepreßt haben und sich nicht mehr weiter zusammenpressen lassen, dann wenigstens diese erwähnten im Querschnitt gegensinnig schrägen Abschnitte aus diesem Klemmeinsatz radial nach innen ausscheren, so daß Platz dafür entsteht, daß der Ring sich noch weiter verkleinern läßt. Gerade dadurch wird jedoch der Ring selbst unrund bzw. erhält er Lücken, woraus die schon erwähnte erschwerte Abdichtung und die ungleichmäßige Beanspruchung des Kabels und der Dichtung folgt.

Der Erfindung liegt demgegenüber die Aufgabe zugrunde, eine Kabelverschraubung der eingangs erwähnten Art zu schaffen, bei welcher die wirksame Wandstärke des geschlitzten Bereiches des Klemmeinsatzes durch die Verformung vergrößert, und die gleichmäßige Rundung dieses Bereiches weitgehend beibehalten werden kann, so daß der in radialer Richtung überdeckbare Klemmbereich für Kabel unterschiedlicher Querschnitte vergrößert wird, d. h. Kabel mit stark voneinander abweichenden Querschnitten mit ein und derselben Kabelverschraubung gehalten und abgedichtet werden können.

Die Lösung dieser scheinbar widersprüchlichen Aufgabe besteht darin, daß alle einander am Umfang jeweils benachbarten Schlitze im Querschnitt abwechselnd gegenläufig schräg zu einem Radius des Klemmeinsatzes und zueinander angeordnet sind, so daß der Klemmeinsatz in lauter im Querschnitt etwa dreieck- oder trapezförmige, einander unmittelbar benachbarte Klemmfinger unterteilt ist, deren breitere Querschnittsseiten abwechselnd an der Innenseite und an der Außenseite des Klemmeinsatzes liegen.

Bei einer axialen Verstellung der Schraubhülse und der Gegenhülse zueinander, in der Regel durch ein Zusammenwirken zweier an diesen Teilen befindlichen, zueinander passenden Gewinden, werden die Klemmfinger in radialer Richtung verformt, wobei durch die unterschiedlichen Schrägungen der Querschnitte die sich zur Innenseite verbreiternden Klemmfinger die Tendenz haben, nach innen auszuweichen, während die übrigen Klemmfinger diese Tendenz weniger oder gar nicht oder gar in umgekehrter Richtung haben, so daß abwechselnd stärker nach innen und nicht oder weniger oder gar nach außen verformte Klemmfinger praktisch die Gesamtwandstärke des Klemmeinsatzes im geschlitzten Bereich vergrößern. Entsprechend schnell können Klemmkräfte ausgeübt werden oder es können größere Durchmesserabweichungen des einzuklemmenden Kabels erfaßt werden, d. h. Kabel mit relativ kleinem und relativ großem Durchmesser können von ein und demselben Klemmeinsatz erfaßt werden. In vorteilhafter Weise wird dabei der Klemmeinsatz an seinem Umfang gleichmäßig verformt, d. h. er behält seine im wesentlichen runde Grundform bei, so daß auch der Umfang eines Kabels oder Schlauches oder einer zwischenliegenden Dichtung entsprechend gleichmäßig beaufschlagt wird. Bei genügend starker Verformung können dabei die breiteren Seiten derjenigen Klemmfinger, deren breitere Seiten der Innenseite des Klemmeinsatzes zugewandt sind, so weit aufeinander zubewegt werden, daß sie sich in Umfangsrichtung berühren oder nahezu berühren und so trotz ihres ursprünglich durch den jeweils zwischenliegenden Klemmfinger bewirkten Abstandes zu einer geschlossenen oder nahezu geschlossenen Innenwandung vereinigen, die eine Dichtung oder einen Schlauch oder ein Kabel klemmend umschließt.

Beim Verschrauben der Schraubhülse mit der Gegenhülse werden also die nach innen gegen den Schlauch oder das Kabel hin trapezförmig sich verjüngenden Klemmfinger die entgegengesetzt geformten Klemmfinger in radialer Richtung einschnürend verdrängen, so daß unter Beibehaltung der im wesentlichen gleichmäßig runden Umfangsform praktisch zwei Klemmfingerringe mit unterschiedlichen Durchmessern entstehen, wobei die beiden ursprünglichen Umfangslinien ihren Abstand in radialer Richtung zueinander vergrößern und also eine stärkere Wandung zwischen Innen- und Außenseite bilden. Dadurch wird beim Verschreuben der beiden Hülsen der Anzugweg verkürzt, bzw. der Klemm- und Dichtbereich bedeutend vergrößert.

Die einander entgegengesetzten Schrägungswinkel der abwechselnd unterschiedlich schräg angeordneten Schlitze können gleich sein und jeder Klemmfinger kann im Querschnitt symmetrisch zu einer auf einem Radius durch seine Mitte verlaufenden Ebene ausgebildet sein. Dies unterstützt und verbessert die Gleichmäßigkeit der Verformung unter Beibehaltung einer im wesentlichen runden Umrißlinie insbesondere an der Innenseite des Klemmeinsatzes.

Die Klemmwirkung und insbesondere der erfaßbare unterschiedliche Durchmesserbereich verschieden dicker Kabel kann dadurch noch vergrößert werden, daß wenigstens ein oder mindestens zwei am Umfang vorzugsweise in gleichem Abstand zueinander angeordnete Klemmfinger durch einen zusätzlichen Schlitz unterteilt sind. Dabei kann wenigstens jeder dritte oder jeder zweite Klemmfinger, vorzugsweise alle Klemmfinger durch einen Schlitz insbesondere in der Mitte unterteilt sein. Somit kann noch einmal jeder Klemmfinger in sich etwas in Umfangsrichtung nachgeben, wenn er radial nach innen verformt wird. Dennoch bleiben die Vorteile der Erfindung erhalten, daß die abwechselnd nach der einen oder anderen Seite dreieck- oder trapezförmigen Klemmfinger durch die abwechselnd im Querschnitt schrägen Schlitze erheblich stärker insbesondere nach innen ausgelenkt werden können, ohne die runde Umfangsform an der Innenseite zu verlieren.

Ausgestaltungen der Erfindung insbesondere bezüglich der Form oder Ausgestaltung der Klemmfinger, der Schlitze und des Klemmeinsatzes sind Gegenstand der Ansprüche 5 bis 17.

Es sei noch erwähnt, daß wenigstens sechs Klemmfinger oder mehr am Umfang nebeneinander angeordnet sein können und bei größeren Umfängen vorzugsweise mehr Klemmfinger proportional der Umfangsvergrößerung gewählt sein können. Für eine möglichst gleichmäßige Umfangsform auch in Klemmposition soll eine größte Breite der Klemmfinger nicht überschritten werden, so daß an einem größeren Umfang eines Klemmeinsatzes entsprechend mehr Klemmfinger untergebracht werden können. Darüber hiansu ergibt die Vergrößerung der Anzahl der Klemmfinger auch eine Vergrößerung der Zahl der Schlitze und somit eine Vergrößerung des radialen Klemmbereiches bei gleichzeitig bestmöglicher Beibehaltung einer runden Form. Dies verbessert nicht nur die Beaufschlagung des Kabels, sondern kann auch die Dichtwirkung von vorneherein gegenüber einer in verformtem Zustand unrunden Form verbessern. Auch wird ein allmähliches Ausweichen von Dichtungsmasse oder dem Werkstoff der Kabel- oder Schlauchoberfläche in einen durch eine unrunde Formgebung sich radial erweiternden Bereich im Lauf der Zeit vermieden. Dichtungswerkstoffe und die Werkstoffe an Kabelmänteln haben nämlich die Eigenschaft, im Laufe der Zeit unter Druckbelastung in Bereiche geringen Druckes davonzukriechen. Dies wird durch eine gleichmäßige Beaufschlagung am gesamten Umfang des Kabels von vorneherein vermieden. In vorteilhafter Weise wird bei der erfindungsgemäßen Kabelverschraubung erreicht, daß bei der radialen Verformung der trapezförmigen Klemmfinger zwei zueinander in radialer Richtung sich verschiebende Ringe unterschiedlicher Durchmesser gebildet sind und sich zwischen dem äußeren, als Druckring wirkenden Ring und dem inneren, als Klemmring wirkenden Ring ein sich zunehmend vergrößernder Abstand ergibt, welcher zwangsweise zur Vergrößerung des überdeckbaren radialen Klemmbereiches bei gleichbleibend runder Querschnittskontur führt. Demgemäß werden Kabel und Dichtung weiterhin gleichmäßig beaufschlagt und die sich praktisch verstärkende oder verdickende Wandung bewirkt eine Klemmung über einen größeren Durchmesserbereich.

Bei einer Kabelverschraubung aus geeignetem Werkstoff, z. B. Kunststoff, kann zumindest ein Klemmeinsatz direkt mit der Schraubhülse oder mit der Gegenhülse einstückig verbunden sein. Außerdem kann die Kabelverschraubung mit einer Dirchtung versehen werden, welche in Kombination mit dem Klemmeinsatz die Abdichtung zwischen Kabel und Schraubhülse verstärken.

Nachstehend ist die Erfindung mit ihren ihr als wesentlich zugehörenden Einzelheiten anhand der Zeichnung noch näher beschrieben. Es zeigt in zum Teil schematisierter Darstellung!

Fig. 1    eine teilweise im Längsschnitt gehaltene Seitenansicht einer erfindungsgemäßen Kabelverschraubung mit Schraubhülse und Gegenhülse und dazwischen in deren Innenbereich angeordneten Klemmeinsatz und einer Dichtung,

Fig. 2    einen Querschnitt des Klemmeinsatzes, wobei gleichzeitig unterschiedliche Ausbildungen der Klemmfinger und der Schlitze in den verschiedenen Quadranten dieses Querschnittes angedeutet sind,

Fig. 3 die Hälfte des Querschnittes eines Klemmeinsatzes in Klemmstellung, wobei trapezförmige Klemmfinger mit breiterer Innenseite gegenüber den jeweils benachbarten Klemmfingern nach innen ausgelenkt sind,

Fig. 4 einen abgewandelten Teillängsschnitt durch eine Kabelverschraubung ähnlich Fig. 1 mit einem radialen Abstand zwischen dem Klemmeinsatz und der Dichtung in Ausgangslage,

Fig. 5 einen Querschnitt des Klemmbereiches mit jeweils unterschiedlich geformten Klemmfingern,

Fig. 6 einen Längsschnitt einer Kabelverschraubung, bei welcher die Klemmhülse im Bereich ihrer Klemmfinger eine ringförmige Innenausnehmung zur Aufnahme einer Kabelaufbauchung und/oder einer Dichtung hat,

Fig. 7 eine der Kabelverschraubung gemäß Fig. 6 etwa entsprechende Ausführungsform einer Kabelverschraubung mit einem Klemmeinsatz mit zwei Klemmbereichen und einem Hohlraum dazwischen, wobei die axialen, im Querschnitt abwechselnd schrägen Schlitze von beiden Stirnseiten des Klemmeinsatzes her über den mittleren Bereich ragen und sich in diesem mittleren Bereich jeweils überlappen,

Fig. 8 eine Kabelverschraubung, bei welcher die im Querschnitt trapezförmigen Klemmfinger in axialer Richtung eine Verringerung ihres Querschnittes haben,

Fig. 9 eine der Fig. 8 etwa entsprechende Kabelverschraubung, bei welcher der Klemmeinsatz mit sich in axialer Richtung verjüngenden Klemmfingern an der Außenseite von einem Klemmring umgriffen ist,

Fig. 10 eine der Fig. 9 entsprechende Kabelverschraubung, bei welcher die Verjüngung der Klemmfinger in axialer Richtung mit großen Radius gekrümmt ist, sowie

Fig. 11 eine Kabelverschraubung im Längsschnitt, bei welcher zwei axial benachbarte Klemmeinsätze einen Abstand und Hohlraum zwischen sich zur Aufnahme einer Dichtung haben.

Eine im ganzen mit 1 bezeichnete Kabelverschraubung hat eine Schraubhülse 2 und eine damit verschraubbare Gegenhülse 3 sowie einen durch die Verschraubung der Schraubhülse 2 mit der Gegenhülse 3 gegen ein Kabel oder einen Schutzschlauch im Inneren der Kabelverschraubung 1 preßbaren geschlitzten Klemmeinsatz 4. Die Gegenhülse 3 übergreift dabei den Klemmeinsatz 4 außen und außerdem mit einer Ringfläche 5 an der Stirnseite 6, wobei diese beiden sich berührenden Flächen als Konus ausgebildet sind, an welchem axiale Schlitze 7 des Klemmeinsatzes 4 münden, welche Schlitze eine radiale Verformung des Klemmeinsatzes 4 durch die axiale Beaufschlagung an dem Konus der Ringflächen 5 und 6 ermöglicht. Durch das Verschrauben der Gegenhülse 3 mit der Schraubhülse 2 und die dadurch entstehende Axialbewegung wird also der Klemmeinsatz in seinem mit den Schlitzen 7 versehenen Bereich radial gegen das Kabel hin verformt, dadurch das Kabel festgelegt und im Ausführungsbeispiel durch eine zwischen dem Klemmeinsatz 4 und dem Kabel befindlicht Dichtung 8 abgedichtet.

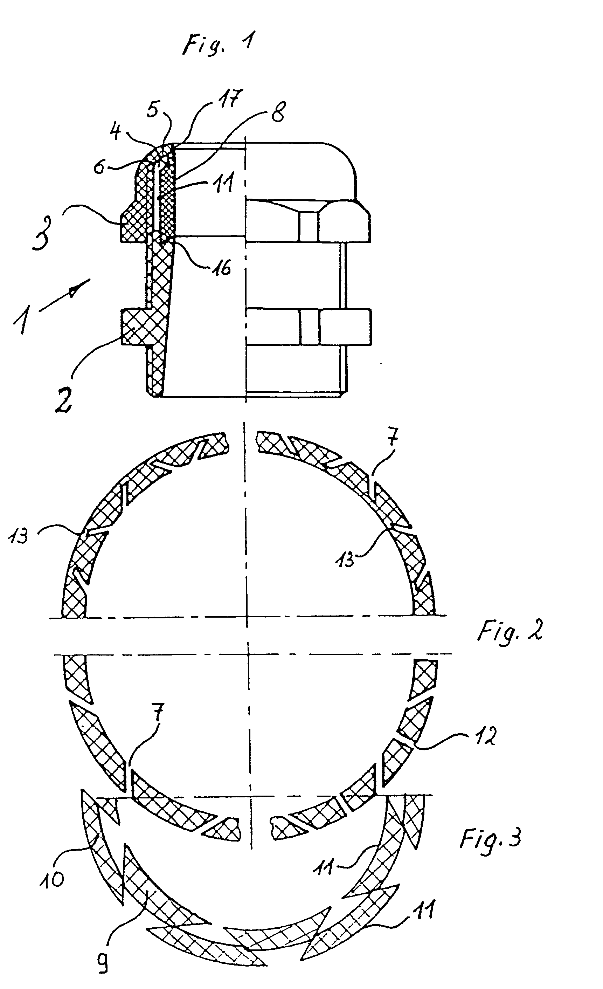

In den Figuren 2, 3 und 5 erkennt man, daß alle einander am Umfang jeweils benachbarten, in axialer Richtung verlaufenden Schlitze 7 im Querschnitt abwechselnd gegenläufig schräg zu einem Radius des Klemmeinsatzes 4 und zueinander angeordnet sind, so daß der Klemmeinsatz 4 in diesem Bereich in lauter im Querschnitt etwa dreieck- oder trapezförmige, einander unmittelbar benachbarte Klemmfinger 9 und 10 unterteilt ist, deren breitere Querschnittsseiten 11 abwechselnd an der Innenseite und an der Außenseite des Klemmeinsatzes 4 liegen. Man erkennt, daß die breitere Querschnittsseite 11 der Klemmfinger 9 jeweils nach innen und die breitere Querschnittsseite 11 der Klemmfinger 10 jeweils an der Außenseite des Klemmeinsatzes 4 angeordnet sind. Dabei sind diese Querschnittsseiten 11 und auch die jeweils gegenüberliegenden Seiten der Rundung des Klemmeinsatzes 4 entsprechend ebenfalls gerundet, um sich auch gut an die Außenkontur eines Kabels oder Schlauches anpassen zu können.

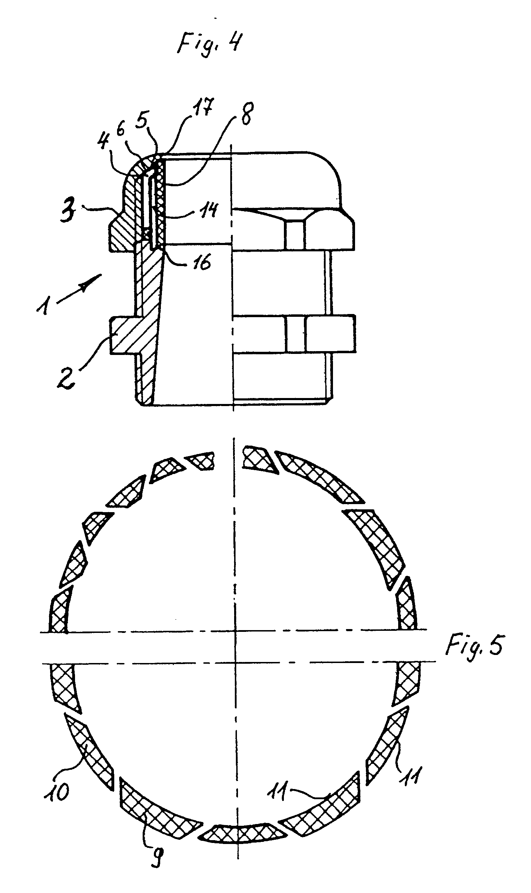

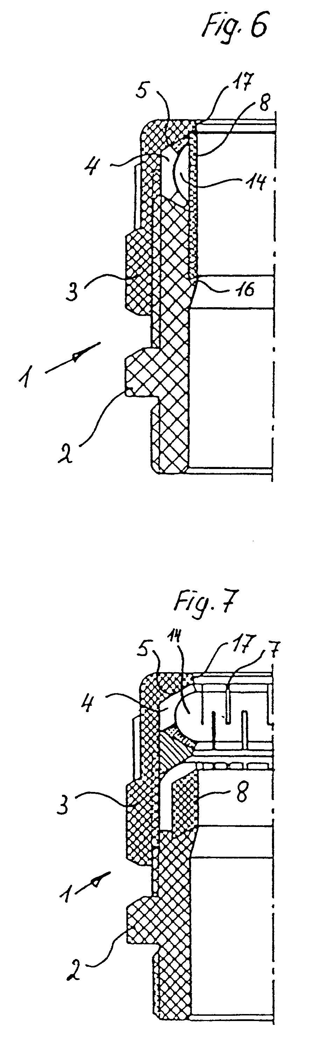

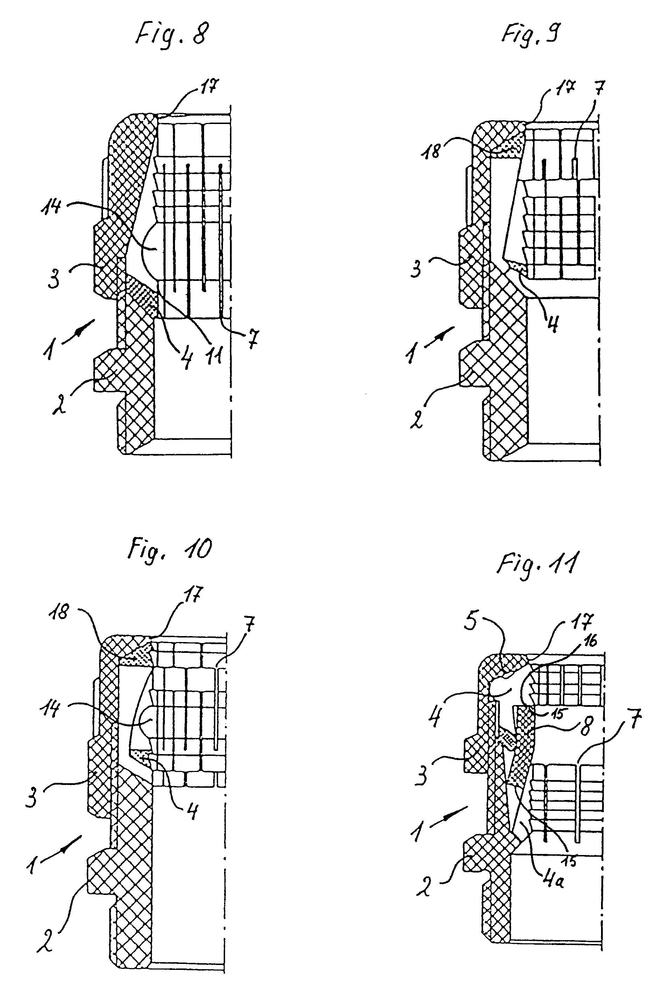

In den Figuren 2 und 4 sind anhand eines Querschnittes durch den geschlitzten Bereich des Klemmeinsatzes 4 unterschiedliche Ausführungsformen dargestellt, wobei jedes Viertel dieses Querschnittes eine jeweils abweichende Ausführungsform zeigt. Es soll jedoch für die einzelnen Klemmeinsätze gelten, daß die einander entgegengesetzten Schrägungswinkel der abwechselnd unterschiedlich schräg angeordneten Schlitze 7 gleich sind und jeder Klemmfinger 9 und 10 im Querschnitt symmetrisch zu einer auf einem Radius durch seine Mitte verlaufenden Ebene ausgebildet ist. Dadurch ergibt sich die in Fig. 3 angeordnete, gleichmäßige Verformung beim Anziehen der Kabelverschraubung 1, durch die, wie in Fig. 3 deutlich erkennbar auch in verformtem Zustand ein weitgehend runder Querschnitt an der Innenseite des Klemmeinsatzes 4 erhalben bleibt, obwohl die Klemmfinger 9 gegenüber den Klemmfingern 10 stärker verformt werden, da die schrägen Schlitze 7 eine entsprechende Keil- und Konuswirkung ausüben.

In Fig. 2 ist dabei in dem rechten unteren Quadranten des Querschnittes noch eine Ausgestaltung angedeutet, die die Nachgiebigkeit in radialer Richtung und damit den überdeckbaren Querschnittsbereich unterschiedlich dicker Kabel vergrößert. Dort erkennt man, daß die Klemmfinger 9 und/oder 10 durch einen zusätzlichen Schlitz 12 unterteilt sein können, wobei bevorzugt alle Klemmfinger 9 und 10 mit einem solchen zusätzlichen Schlitz 12 in ihrer Mitte versehen sein können. Ein derartig noch einmel geschlitzter Klemmfinger 9 oder 10 kann bei seiner Verformung auch in seiner Breite verringert werden, so daß er sich an einen noch geringeren Umfang eines Kabels anpassen kann.

In Fig. 5 ist angedeutet, daß die nebeneinanderliegenden, jeweils im Querschnitt abwechselnd nach innen oder außen konischen Klemmfinger 9 und 10 mit ihren Innen- und Aussenflächen auf verschiedenen Umfängen angeordnet sein können, insbesondere unterschiedliche radiale Dicke haben oder in radialer Richtung gegeneinander versetzt angeordnet sein können. So zeigt der linke obere Quadrant der Fig. 5, wie die einander entgegengesetzt konischen Klemmfinger in Ausgangslage etwas gegeneinander versetzt sind. Der rechte obere Quadrant zeigt eine Ausführung, bei welcher die Klemmfinger 9 eine größere radiale Dicke als die Klemmfinger 10 haben. In Ausgangsstellung ist jedoch die Außenkontur dieser Klemmfinger 9 und 10 übereinstimmend. Die beiden unteren Quadranten zeigen ebenfalls in radialer Richtung dickere Klemmfinger 9 gegenüber den Klemmfingern 10, wobei jedoch die Innenkontur übereinstimmend ist und demgemäß an der Außenkontur eine axiale Strukturierung gebildet ist.

Eine für die Dichtigkeit der Kabelverschraubung 1 zweckmäßige Ausgestaltung ist in den beiden oberen Quadranten des Querschnittes nach Fig. 2 angedeutet. Demgemäß können nämlich die Schlitze 7 zwischen den Klemmfingern 9 und 10 an der Innen- oder Außenseite durch eine dünne nachgiebige Wandung oder elastische Haut 13 verschlossen sein. Wegen der in Fig. 3 angedeuteten zum Teil erheblichen radialen Relativbewegung der Klemmfinger 9 und 10 zueinander kann dabei die elastische Haut 13 bei dieser radialen Verformung der Klemmfinger 9 und 10 dehnbar oder gar einreißbar sein.

Es sei erwähnt, daß die axialen Schlitze auch an der von dem Innenkonus 5 der Gegenhülse 3 beaufschlagten Stirnseite 6 durch eine dünne Haut 13 abgeschlossen sein können. Durch die Haut 13 kann die Dichtwirkung des Klemmeinsatzes 4 selbst verbessert werden.

In den Figuren 6, 7, 8, 10 und 11 ist angedeutet, daß zumindest die Klemmfinger 9, die an ihrer dem Kabel zugewandten Innenseite 11 in Umfangsrichtung breiter als an ihrer abgewandten Außenseite sind, erforderlichenfalls aber auch die anderen Klemmfinger 10 in ihrem axialen Verlauf eine an der Innenseite 11 befindliche Ausnehmung 14 haben, wobei die Ausnehmungen 14 dieser Klemmfinger insgesamt einen ringförmigen Hohlraum an der Innenseite zumindest des verformten Klemmeinsatzes 4 zur Aufnahme einer durch den Druck des Klemmeinsatzes 4 beidseits dieses Hohlraumes gebildeten Aufbauchung der Kabel- oder Schlauchoberfläche bilden. Dabei kann mit einer erheblichen Aufbauchung gerechnet werden, wenn man die erhebliche radiale Verformung der Klemmfinger 9 gemäß Fig. 3 in Betracht zieht. Entsprechend sicher und fest wird das Kabel gehalten und die trapezförmige Querschnittsform der Klemmfinger 9 bewirkt somit nicht nur ein en größeren überdeckbaren Querschnittsbereich der erfaßbaren unterschiedlichen Kabelstärken, sondern erlaubt auch in Klemmstellung eine weitgehend formschlüssige Halterung des Kabels.

Zumindest die an ihrer Innenseite breiteren Klemmfinger 9 können an ihrer Innenseite außerdem eine Profilierung gemäß der Oberflächenform von Profilschläuchen haben und mit ihren Profilvorsprüngen in entsprechende Profilvertiefungen des Schlauches in Gebrauchsstellung eingreifen. In den Figuren 8 bis 11 ist eine sägezahnartige Profilierung angedeutet, die durch die vorbeschriebene Profilierung gemäß der üblichen Oberflächenform von Profilschläuchen abgewandelt sein könnte.

Gemäß den Figuren 1, 4, 6 und 11 kann an der Innenseite der abwechselnd nach innen und außen konischen Klemmfinger 9 und 10 der schon erwähnte Dichtungssatz 8 in den Klemmeinsatz 4 eingefügt und gegebenenfalls an seinen Stirnseiten 15 von Vorsprüngen doer Absätzen 16 des Klemmeinsatzes 4 und/oder der Hülsen 2 und 3 übergriffen und abgestützt sein.

In Fig. 1 ist der Dichtungssatz einmal an der Innenseite der Gegenhülse 3 und zum anderen an der Innenseite der Schraubhülse 2 an einem Absatz 16 abgestützt, wobei dieser Absatz 16 der Schraubhülse eine negative Schrägung hat, die den Dichtungseinsatz 8 an dieser Stelle etwas übergreift. Die Klemmstelle wird dabei sowohl in diesem Falle als auch in den Ausführungsformen nach den Figuren 4 und 6 von der Dichtung 8 gegenüber dem Schlauch oder Kabel abgesch irmt. Auch in Fig. 4 stützt sich die Dichtung 8 einmal an einem in diesem Falle etwa radialen Absatz 16 der Schraubhülse 2 und der Innenseite des Randes 17 der Öffnung der Gegenhülse 3 ab.

Fig. 11 schließlich zeigt eine Lösung, bei welcher sich die Dichtung einerseits an einem Absatz 16 des Klemmeinsatzes 4 abstützt, während sie andererseits einen zweiten Klemmeinsatz 4a an der Außenseite übergreift.

In all diesen Fällen wird durch die starke "Übersetzung" der Axialbewegung zwischen Schraubhülse 2 und Gegenhülse 3 beim Anziehen des gemeinsamen Gewindes sehr schnell und stark eine Dichtwirkung erzielt oder aber ein relativ großer Querschnittsunterschied unterschiedlich dikker, von der Kabelverschraubung 1 erfaßter Kabel oder Schläuche überbrückt.

Die Figuren 8 bis 10 zeigen Beispiele, bei welchen die Klemmfinger 9 und 10 zumindest bereichsweise an ihrer Außenseite in axialer Richtung derart schräg geformt sind, daß ihr Querschnitt sich zu der Stirnseite hin verringert, wobei der Schrägungswinkel spitz ist. Dadurch kann bei in Gebrauchsstellung befindlicher Kabelverschraubung 1 ein von dem Kabel auf diese Klemmfinger ausgeübte Zugkraft dazu dienen, die Klemmkraft der Klemmfinger 9 selbsttätig zu erhöhen, weil die schlanke Außenschräge zu einer immer stärkeren Zusammendrückung des Klemmeinsatzes bei Zugbelastung des Kabels in Richtung des Abfalles dieser Schräge wirkt.

Fig. 10 zeigt dabei, daß die Querschnittsverminderung in axialer Richtung der Klemmfinger 9 und 10 an deren Außenseite gewölbt sein kann. Es sei erwähnt, daß für eine Selbsthemmung dieser im Querschnitt trapezförmigen Klemmfinger 9 und/oder 10 eine derartige schlanke Schräge auch von einem mittleren Bereich nach beiden Seiten hin abfallen könnte.

In den Ausführungsbeispielen nach Fig. 9 und 10 ist vorgesehen, daß an der sich spitzwinklig verjüngenden Außenseite der Klemmfinger 9 und 10 ein gemäß der Verjüngung oder Wölbung geformter Ring 18, im Ausführungsbeispiel ein weiterer Klemmring angeordnet ist. Darüber hinaus zeigt Fig. 8 ebenfalls eine derartige Anordnung, wobei dieser äußere Ring in diesem Falle gleichzeitig die Gegenhülse 3 ist, deren Innenseite entsprchend geformt ist.

Anhand der Fig. 11 wurde schon erwähnt, daß zwei Klemmeinsätze 4 und 4a jeweils mit im Querschnitt abwechselnd nach innen und außen konischen Klemmfinger 9 und 10 vorgesehen sein können, deren Klemmbereiche axial mit Abstand nebeneinander am Kabel oder Schlauch angreifen und zwischen sich einen Hohlraum oder Abstand aufweisen. Gemäß Fig. 6 und 7 können nun diese Klemmeinsätze 4 und 4a einerseits einstückig verbunden sein und andererseits - ob einstückig verbunden oder nicht - an den voneinander abgewandten Stirnseiten jeweils konisch oder gerundet mit einem Inn enkonus 5 der Schraub- und Gegenhülse zum radialen Verformen bei axialer Verschraubung der beiden Hülsen versehen sein bzw. zusammenwirken. Der erwähnte Abstand oder Hohlraum kann wiederum eine Aufbauchung des Kabels und/oder eine Dichtung 8 aufnehmen.

In den Figuren 2, 3 und 5 erkennt man, daß die Zahl der Klemmfinger 9 und 10 zwar jeweils gleich groß ist, daß man aber bei unterschiedlichen Formen und Durchmessern der Klemmeinsätze 4 die Gesamtzahl der Klemmfinger variieren kann. Dabei sind wenigstens sechs Klemmfinger 9 und 10 oder mehr am Umfang nebeneinander angeordnet. Je größer die Umfänge der Klemmeinsätze 4 und der Kabelverschraubung 1 sind, umso mehr Klemmfinger 9 und 10 wird man vorsehen. Entsprechend gut kann auch in verformter Position vor allem die Innenseite des geschlitzten Bereiches des Klemmeinsatzes 4 an eine runde Kontur angepaßt bleiben, so daß ein Kabel oder ein Schlauch gleichmäßig am Umfang geklemmt und abgedichtet wird.

Fig. 3 verdeutlicht dabei, daß beim Verschrauben der Schraubhülse 2 mit der Gegenhülse 3 über die ringförmigen Druckflächen die nach innen trapezförmig sich verjüngenden Klemmfinger 10 die entgegengesetzt geformten Klemmfinger 9 in radialer Richtung verdrängen und dadurch eine Einschnürung am Kabel bewirken, so daß unter Beibehaltung der gleichmäßig runden Umfangsform praktisch zwei Klemmfingerringe mit unterschiedlichen Durchmessern entstehen. Dabei vergrößern die beiden ursprünglichen Umfangslinien ihren Abstand in radialer Richtung zueinander und bilden gewissermaßen insgesamt eine stärkere Wandung des Klemmeinsatzes 4 zwischen Innen- und Außenkontur, wodurch beim Verschrauben der beiden Hülsen 2 und 3 der Anzugweg verkürzt bzw. der Klemm- und Dichtbereich zur Berücksichtigung Kabel unterschiedlicher Durchmesser bedeutend vergrößert wird. Dennoch ist der Herstellungsaufwand praktisch nicht anders als bei ganz oder überwiegend mit S chlitzen in übereinstimmender Schrägungsrichtung.

Alle in der Beschreibung, den Ansprüchen, der Zusammenfassung und der Zeichnung dargestellten Merkmale und Konstruktionsdetails können sowohl einzeln als auch in beliebiger Kombination miteinander wesentliche Bedeutung haben.

## Patentansprüche

1. Kabelverschraubung (1) mit einer Schraubhülse (2), mit einer mit ihr verschraubbaren Gegenhülse (3) und mit einem damit oder dadurch gegen das Kabel oder einen Schutzschlauch preßbaren geschlitzten Klemmeinsatz (4), wobei die Gegenhülse (3) od. dgl. den Klemmeinsatz (4) außen vorzugsweise mit einer Ringfläche (5) zumindest an der Stirnseite (6) übergreift und beim Anziehen des Gewindes vorzugsweise mit einer sich verjüngenden Form, z. B. mittels eines Konus, einen mit axialen, an der Stirnseite (6) mündenden Schlitzen (7) versehenen Bereich des Klemmeinsatzes (4) radial gegen das Kabel hin verformt, das Kabel so festlegt und mittelbar oder unmittelbar abdichtet, wobei die sich axial erstreckenden Schlitze (7) im Querschnitt gesehen schräg zum Radius des Klemmeinsatzes (4) bzw. des erfaßten Kabels verlaufen, **dadurch gekennzeichnet,** daß alle einander am Umfang jeweils benachbaren Schlitze (7) im Querschnitt abwechselnd gegenläufig schräg zu einem Radius des Klemmeinsatzes (4) und zueinander angeordnet sind, so daß der Klemmeinsatz (4) in lauter im Querschnitt etwa dreieck- oder trapezförmige, einander unmittelbar benachbarte Klemmfinger(9, 10) unterteilt ist, deren breitere Querschnittsseite (11) abwechselnd an der Innenseite und an der Außenseite des Klemmeinsatzes (4) liegen.

2. Kabelverschraubung nach Anspruch 1, dadurch gekennzeichnet, daß die einander entgegengesetzten Schrägungswinkel der abwechselnd unterschiedlich schräg angeordneten Schlitze (7) gleich sind und jeder Klemmfinger (9, 10) im Querschnitt symmetrisch zu einer auf einem Radius durch seine Mitte verlaufenden Ebene ausgebildet ist.

3. Kabelverschraubung nach Anspruch 1 oder 2, dadurch gekennzeichnet, daß wenigstens ein oder mindestens zwei am Umfang vorzugsweise in gleichem Abstand zueinander angeordnete Klemmfinger (9, 10) durch einen zusätzlichen Schlitz (12) unterteilt sind.

4. Kabelverschraubung nach Anspruch 3, dadurch gekennzeichnet, daß wenigstens jeder 3. oder jeder 2. Klemmfinger,vorzugsweise alle Klemmfinger durch einen im Querschnitt vorzugsweise radialen Schlitz insbesondere in der Mitte unterteilt sind.

5. Kabelverschraubung nach einem der Ansprüche 1 bis 4, dadurch gekennzeichnet, daß die nebeneinanderliegenden, jeweils im Querschnitt abwechselnd nach innen oder außen konischen Klemmfinger (9, 10) mit ihren Innen- und Außenflächen auf verschiedenen Umfängen angeordnet sind, insbesondere unterschiedliche radiale Dicke haben oder in radialer Richtung gegeneinander versetzt angeordnet sind.

6. Kabelverschraubung nach einem der vorstehenden Ansprüche, dadurch gekennzeichnet, daß bei der radialen Verformung der trapezförmigen Klemmfinger zwei zueinander in radialer Richtung sich verschiebende Ringe gebildet sind, und sich zwischen dem äußeren als Druckring wirkenden Ring und dem inneren als Klemmring wirkenden Ring ein sich zunehmend vergrößernder Abstand ergibt, welcher zwangsweise zur Vergrößerung des überdeckbaren radialen Klemmbereiches bei gleichbleibend runder Querschnittskontur führt.

7. Kabelverschraubung nach einem der Ansprüche 1 bis 6, dadurch gekennzeichnet, daß die Schlitze (7) zwischen den Klemmfingern (9, 10) an der Innen- und/oder Außenseite durch eine dünne nachgiebige Wandung oder elastische Haut (13) verschlossen sind.

8. Kabelverschraubung nach Anspruch 7, dadurch gekennzeichnet, daß die elastische Haut (13) bei der radialen Verformung der Klemmfinger (9, 10) faltbar/ dehnbar oder einreißbar ist.

9. Kabelverschraubung nach einem der vorstehenden Ansprüche, dadurch gekennzeichnet, daß die axialen Schlitze (7) an der von dem Innenkonus (5) der Gegenhülse (3) beaufschlagten Stirnseite (6) ebenfalls durch eine dünne Haut (13) abgeschlossen sind.

10. Kabelverschraubung nach einem der vorstehenden Ansprüche, dadurch gekennzeichnet, daß zumindest die Klemmfinger (9), die an ihrer dem Kabel zugewandten Innenseite (11) in Umfangsrichtung breiter als an ihrer abgewandten Außenseite sind, in ihrem axialen Verlauf eine an der Innenseite (11) befindliche Ausnehmung (14) haben, wobei die Ausnehmungen (14) dieser Klemmfinger insgesamt einen ringförmigen Hohlraum an der Innenseite zumindest des verformten Klemmeinsatzes (4) zur Aufnahme einer durch den Druck des Klemmeinsatzes (4) beidseitig dieses Hohlraumes gebildeten Aufbauchung der Kabel- oder Schlauchoberfläche bilden.

11. Kabelverschraubung nach einem der vorstehenden Ansprüche, dadurch gekennzeichnet, daß zumindest die an ihrer Innenseite breiter als an ihrer Außenseite ausgebildeten Klemmfinger (9) an ihrer Innenseite eine Profilierung gemäß der Oberflächenform von Profilschläuchen haben und mit ihren Profilvorsprüngen in entsprechende Profilvertiefungen des Schlauches in Gebrauchsstellung eingreifen.

12. Kabelverschraubung nach einem der vorstehenden Ansprüche, dadurch gekennzeichnet, daß an der Innenseite der abwechselnd nach innen oder außen konischen Klemmfinger (9, 10) ein Dichtungseinsatz (8) in den Klemmeinsatz (4) eingefügt und gegebenenfalls an seinen Stirnseiten (15) von Vorsprüngen oder Absätzen (16) des Klemmeinsatzes (4) und/oder der Hülsen (2, 3) übergriffen und abgestützt ist.

13. Kabelverschraubung nach einem der vorstehenden Ansprüche, dadurch gekennzeichnet, daß zwei Klemmeinsätze (4, 4a) jeweils mit im Querschnitt abwechselnd nach inn en und außen konischen Klemmfingern (9, 10) vorgesehen sind, deren Klemmbereiche axial mit Abstand nebeneinander am Kabel oder Schlauch angreifen und zwischen sich einen Hohlraum aufweisen und an den voneinander abgewandten Stirnseiten jeweils konisch oder gerundet mit einem Innenkonus (5) der Schraub- und Gegenhülse zum radialen Verformen bei axialer Verschraubung der beiden Hülsen versehen sind bzw. zusammenwirken.

14. Kabelverschraubung nach einem der vorstehenden Ansprüche, dadurch gekennzeichnet, daß die beiden Klemmeinsätze einstückig verbunden sind.

15. Kabelverschraubung nach einem der vorstehenden Ansprüche, dadurch gekennzeichnet, daß die an den voneinander abgewandten Stirnseiten mündenden, im Querschnitt abwechselnd nach der einen oder anderen Seite radiusschrägen Schlitze der einstückig verbundenen Klemmeinsätze in axialer Richtung jeweils über die Hälfte des Klemmeinsatzes hinaus in die andere Hälfte reichen.

16. Kabelverschraubung nach einem der vorstehenden Ansprüche, dadurch gekennzeichnet, daß die Klemmfinger zumindest bereichsweise an ihrer Außenseite in axialer Richtung derart schräg geformt sind, daß ihr Querschnitt sich zu der Stirnseite hin verringert, wobei der Schrägungswinkel selbsthemmend spitz ist.

17. Kabelverschraubung nach einem der vorstehenden Ansprüche, dadurch gekennzeichnet, daß die Querschnittsverminderung in axialer Richtung der Klemmfinger (9, 10) an deren Außenseite gewölbt ist.

18. Kabelverschraubung nach einem der vorstehenden Ansprüche, dadurch gekennzeichnet, daß an der sich spitzwinklig verjüngenden Außenseite der Klemmfinger (9, 10) ein gemäß deren Verjüngung oder Wölbung geformter Ring (18) vorzugsweise ein außen ein- oder beidseitig stumpfwinkligeren Klemmring angeordnet ist, welcher den spitzwinkligen Klemmring ganz oder teilweise umgreift.

19. Kabelverschraubung nach einem der vorstehenden Ansprüche, dadurch gekennzeichnet, daß wenigstens sechs Klemmfinger (9, 10) oder mehr am Umfang nebeneinander angeordnet sind und bei größeren Umfängen vorzugsweise mehr Klemmfinger proportional der Umfangsvergrößerung gewählt sind.

20. Kabelverschraubung nach einem der vorstehenden Ansprüche, dadurch gekennzeichnet, daß zumindest ein Klemmeinsatz mit der Schraubhülse (2) oder Gegenhülse (3) einstükkig verbunden ist.

## Claims

1. A screw-threaded cable fitting (1) including a threaded sleeve (2) and a counterpart sleeve (3) interconnectable by screw action, and further including a slit clamping means adapted to be pressed therewith or thereby against the cable or a protective hose or tube, the counterpart sleeve (3) or the like outwardly engaging over the clamping means (4) preferably with a ring area (5) at least at the front end (6) and, as the thread is tightened, deforming preferably with a tapering shape, e.g. by means of a cone, an area which belongs to the clamping means (4) and is provided with axial slits (7) opening out at the front end (6), such deformation taking place radially towards the cable, thus fixing and directly or indirectly sealing the cable, the axially extending slits (7) - viewed in cross section - showing an oblique development to the radius of the clamping means (4) and of the gripped cable, **characterized in that** all the slits (7) adjacent to one another at the circumference are arranged so as in cross section to show an oblique development in opposite directions, alternately, to a radius of the clamping means (4) and to one another, so that the clamping means (4) is subdivided into a plurality of clamping fingers (9, 10) which are directly adjacent to one another and are approximately triangular or trapeziform in cross section, the wider cross-sectional side (11) of said fingers lying at the inside and at the outside of the clamping means (4), alternately.

2. A screw-threaded cable fitting as claimed in claim 1, characterized in that the opposing angles of slope of the slits (7) arranged so as to show an oblique development in different directions, alternately, are equal and each clamping finger (9, 10) is devised so as in cross section to be symmetrical to a plane running on a radius through the centre of said finger.

3. A screw-threaded cable fitting as claimed in claim 1 or claim 2, characterized in that at least one or no less than two clamping fingers (9, 10) arranged preferably equidistantly at the circumference are subdivided by an additional slit (12).

4. A screw threaded cable fitting as claimed in claim 3, characterized in that at least each third or each second clamping finger, preferably all the clamping fingers, are subdivided particularly in the centre by a slit preferably radial in cross section.

5. A screw-threaded cable fitting as claimed in any one of claims 1 to 4, characterized in that the clamping fingers (9, 10) lying side by side which in cross section taper inwardly or outwardly, alternately, have their inner and outer surfaces arranged on different circumferences, particularly are of different radial thickness or are staggered in the radial direction.

6. A screw-threaded cable fitting as claimed in any one of the preceding claims, characterized in that in the radial deformation of the trapeziform clamping fingers, two rings shifting relative to one another in the radial direction are composed, and between the outer ring acting as a thrust ring and the inner ring acting as a clamping ring an increasingly enlarged distance is formed forcibly leading to the enlargement of the overlappable radial clamping area, the round cross-sectional contour remaining unchanged.

7. A screw-threaded cable fitting as claimed in any one of claims 1 to 6, characterized in that the slits (7) between the clamping fingers (9, 10) are closed at the inside and/or outside by a thin, yielding wall or elastic skin (13).

8. A screw-threaded cable fitting as claimed in claim 7, characterized in that in the radial deformation of the clamping fingers (9, 10) the elastic skin (13) is foldable/expansible or rupturable.

9. A screw-threaded cable fitting as claimed in any one of the preceding claims, characterized in that the axial slits (7) are likewise closed by a thin skin (13) at the front end (6) acted upon by the inner cone (5) of the counterpart sleeve (3).

10. A screw-threaded cable fitting as claimed in any one of the preceding claims, characterized in that at least those clamping fingers (9) which are wider in the circumferential direction at their inside (11) facing the cable than at their averted outside have in their axial path a recess (14) situated at the inside (11), the recesses (14) of said clamping fingers altogether composing a ring-shaped cavity at the inside at least of the deformed clamping means (4) to receive a bulge of the cable or hose surface, said bulge being formed on either side of said cavity by the pressure of the clamping means (4).

11. A screw-threaded cable fitting as claimed in any one of the preceding claims, characterized in that at least those clamping fingers (9) which are wider at their inside than at their outside have at their inside a profiling according to the surface contour of profiled hoses and in the use position have the projections in their profiling engaging in corresponding depressions in the profiling of the hose.

12. A screw-threaded cable fitting as claimed in any one of the preceding claims, characterized in that at the inside of the clamping fingers (9, 10) tapering inwardly or outwardly, alternately, a seal (8) in inserted in the clamping means (4), and said seal at the end faces (15) thereof may be engaged over and supported by projections or shoulders (16) of the clamping means (4) and/or of the sleeves (2, 3).

13. A screw-threaded cable fitting as claimed in any one of the preceding claims, characterized in that two clamping means (4, 4a) are provided in each case with clamping fingers (9, 10) which in cross section taper inwardly and outwardly, alternately, the clamping areas of said clamping means (4, 4a) acting upon the cable or hose in axially adjacent, spaced relationship to one another and further having a cavity between them, and at the faces averted from one another said clamping means are provided with or co-operate with in conical or rounded form an inner cone (5) of the threaded sleeve and counterpart sleeve for radial deformation when the two sleeves are axially interconnected by screw action.

14. A screw-threaded cable fitting as claimed in any one of the preceding claims, characterized in that the two clamping means are integrally connected.

15. A screw-threaded cable fitting as claimed in any one of the preceding claims, characterized in that the slits which belong to the integrally connected clamping means, open out at the faces averted from one another and show an oblique development in the one or other direction, alternately, to a radius, extend in the axial direction in each case beyond the one half of the clamping means to the other half.

16. A screw-threaded cable fitting as claimed in any one of the preceding claims, characterized in that the clamping fingers, at least in areas at the outside thereof, are obliquely shaped in the axial direction in such a way that the cross section thereof diminishes towards the face, the angle of slope being self-lockingly acute.

17. A screw-threaded cable fitting as claimed inany one of the preceding claims, characterized in that the cross-sectional diminution in the axial direction of the clamping fingers (9, 10) at the outside thereof is curved.

18. A screw-threaded cable fitting as claimed in any one of the preceding claims, characterized in that a ring (18) is arranged at the clamping fingers (9, 10) at the outside thereof tapering with an acute angle and is shaped according to the taper or curvature thereof, preferably a clamping ring which is externally obtuse-angled from one or two directions and wholly or partly encompasses the acute-angled clamping ring.

19. A screw-threaded cable fitting as claimed in any one of the preceding claims, characterized in that at least six clamping fingers (9, 10) or more are arranged side by side at the circumference and in the case of larger circumferences clamping fingers are preferably selected in a greater number proportional to the circumferential increase.

20. A screw-threaded cable fitting as claimed in any one of the preceding claims, characterized in that at least one clamping means is integrally connected to the threaded sleeve (2) or counterpart sleeve (3).

**Revendications**

1. Passe-câble à vis (1) comprenant un manchon fileté (2), un contre-manchon (3) qui peut lui être lié par vissage et une garniture de serrage fendue (4) qui peut être pressée avec lui ou grâce à lui contre le câble ou contre une gaine protectrice, cependant que le contre-manchon (3) ou similaire recouvre extérieurement la garniture de serrage (4), du moins sur son côté frontal, et de préférence par une surface annulaire (5), que, lors du vissage du filetage, il déforme radialement vers le câble une région de la garniture de serrage (4) qui est munie de fentes axiales (7) débouchant sur le côté frontal (5), et ce, de préférence, par une forme se rétrécissant, par exemple au moyen d'un cône, en fixant ainsi le câble et en le rendant étanche directement ou indirectement, et que les fentes s'étendant axialement (7), vues en coupe transversale, s'étendent obliquement par rapport au rayon de la garniture de serrage (4) ou, respectivement, du câble enserré, caractérisé par le fait que toutes les fentes (7) qui sont à chaque fois voisines les unes des autres sur la périphérie sont disposées en section transversale en étant alternativement obliques dans des sens opposés par rapport à un rayon de la garniture de serrage (4) et les unes par rapport aux autres, de sorte que la garniture de serrage (4) est divisée en doigts de serrage (9, 10) qui présentent à peu près la forme d'un triangle ou d'un trapèze, uniquement en section transversale, qui sont immédiatement voisins les uns des autres et dont les côtés les plus larges en section transversale (11) sont situés alternativement sur le côté intérieur et sur le côté extérieur de la garniture de serrage (4).

2. Passe-fil a vis selon la revendication 1, caractérisé par le fait que les angles d'inclinaison opposés l'un à l'autre des fentes (7) disposées alternativement avec une inclinaison différente sont égaux, et que chaque doigt de serrage (9, 10) est réalisé en section transversale de manière symétrique par rapport à un plan qui s'étend sur un rayon en passant par son milieu.

3. Passe-fil à vis selon la revendication 1 ou 2, caractérisé par le fait qu'au moins un doigt de serrage (9, 10), ou au moins deux qui sont répartis sur le pourtour, de préférence à la même distance entre eux, sont divisés par une fente supplémentaire (12).

4. Passe-fil à vis selon la revendication 3, caractérisé par le fait qu'au moins chaque troisième doigt de serrage, ou chaque deuxième, et de préférence tous les doigts de serrage, sont divisés par une fente, de préférence radiale, en section transversale, et en particulier en leur milieu.

5. Passe-fil à vis selon l'une des revendications 1 à 4, caractérisé par le fait que les doigts de serrage (9, 10) situés les uns à côté des autres, lesquels sont à chaque fois coniques en section transversale, alternativement vers l'intérieur et vers l'extérieur, sont disposés par leurs surfaces intérieures et extérieures sur des pourtours différents, en présentant en particulier des épaisseurs radiales différentes ou en étant décalés les uns par rapport aux autres en direction radiale.

6. Passe-fil à vis selon l'une des revendications précédentes, caractérisé par le fait que, lors de la déformation radiale des doigts de serrage en forme de trapèze, il se forme deux anneaux qui se déplacent l'un par rapport à l'autre dans la direction radiale, et qu'il se produit, entre l'anneau extérieur agissant comme anneau de pression et l'anneau intérieur agissant comme anneau de serrage, une distance qui s'agrandit de manière croissante et qui conduit de manière forcée à l'agrandissement de la région radiale pouvant être recouverte pour un contour en section transversale qui est rond et qui reste le même.

7. Passe-fil à vis selon l'une des revendications 1 à 6, caractérisé par le fait que les fentes (7) ménagées entre les doigts de serrage (9, 10) sont fermées sur le côté intérieur et/ou sur le côté extérieur par une paroi mince et flexible ou par une membrane élastique (13).

8. Passe-fil à vis selon la revendication 7, caractérisé par le fait que la membrane élastique (13), lors de la déformation radiale des doigts de serrage (9, 10), est pliable, extensible ou déchirable.

9. Passe-fil à vis selon l'une des revendications précédentes, caractérisé par le fait que les fentes (7) axiales sont également fermées par une membrane mince (13) sur le côté frontal (6) sur lequel agit le cône intérieur (5) du contre-manchon (3).

10. Passe-fil à vis selon l'une des revendications précédentes, caractérisé par le fait qu'au moins les doigts de serrage (9) qui sont plus larges dans la direction de leur pourtour sur leur côté intérieur (11) tourné vers le câble que sur leur côté extérieur opposé à lui, comportent sur leur tracé axial un évidement (14) qui se trouve sur le côté intérieur (11), les évidements (14) de ces doigts de serrage constituant dans leur ensemble un espace creux annulaire sur le côté intérieur, du moins de la garniture de serrage déformée (4), en vue de recevoir un renflement de la surface du câble ou de la gaine qui est formé des deux côtés de cet espace creux par la pression de la garniture de serrage (4).

11. Passe-fil à vis selon l'une des revendications précédentes, caractérisé par le fait qu'au moins les doigts de serrage (9) dont la conformation est plus large sur leur côté intérieur que sur leur côté extérieur présentent sur leur côté intérieur un profil conforme à la forme de la surface de petites gaines profilées, et que, dans la position d'utilisation, ils pénètrent par les sailles de leur profil dans des renfoncements correspondants du profil de la gaine.

12. Passe-fil à vis selon l'une des revendications précédentes, caractérisé par le fait que, sur le côté intérieur des doigts de serrage (9, 10) qui sont alternativement coniques vers l'intérieur et vers l'extérieur, une garniture d'étanchéité (8) est insérée dans la garniture de serrage (4), et qu'elle est éventuellement recouverte et soutenue sur ses côtés frontaux (15) par des saillies ou des épaulements (16) de la garniture de serrage (4) et/ou des manchons (2, 3).

13. Passe-fil à vis selon l'une des revendications précédentes, caractérisé par le fait qu'il est prévu deux garnitures de serrage (4, 4a) qui comprennent à chaque fois des doigts de serrage (9, 10) alternativement coniques vers l'intérieur et vers l'extérieur et dont les zones de serrage sont en prise axialement sur le câble ou la gaine, à distance et les unes à côté des autres, qu'elles comportent entre elles un espace creux et que, sur les côtés frontaux opposés l'un à l'autre, elles sont munies, en étant à chaque fois coniques ou arrondies, d'un cône intérieur (5) du manchon fileté et du contre-manchon pour la déformation radiale lors du vissage axial des deux manchons ou, respectivement, qu'elles coopèrent avec lui.

14. Passe-fil à vis selon l'une des revendications précédentes, caractérisé par le fait que les deux garnitures de serrage sont reliées d'un seul tenant.

15. Passe-fil à vis selon l'une des revendications précédentes, caractérisé par le fait que les fentes des garnitures de serrage reliées d'un seul tenant qui débouchent sur les côtés frontaux opposés l'un à l'autre et qui, en section transversale, sont obliques par rapport au rayon, alternativement vers l'un et vers l'autre côté, arrivent à chaque fois en direction axiale au-delà de la moitié de la garniture de serrage jusque dans l'autre moitié.

16. Passe-fil à vis selon l'une des revendications précédentes, caractérisé par le fait que les doigts de serrage sont conformés obliquement en direction axiale, du moins localement, sur leur côté extérieur, de telle sorte que leur section transversale se rétrécit vers le côté frontal, l'angle d'inclinaison étant assez aigu pour être autobloquant.

17. Passe-fil à vis selon l'une des revendications précédentes, caractérisé par le fait que la diminution de section transversale en direction axiale des doigts de serrage (9, 10) est courbée sur son côté extérieur.

18. Passe-fil à vis selon l'une des revendications précédentes, caractérisé par le fait que, sur le côté extérieur des doigts de serrage (9, 10) qui se rétrécit en angle aigu, est disposée une bague (18) qui est formée selon leur rétrécissement ou leur courbure, qui est de préférence une bague de serrage dont l'angle est extérieurement plus obtus, d'un côté ou des deux côtés, et qui entoure partiellement ou totalement la bague de serrage à angle aigu.

19. Passe-fil à vis selon l'une des revendications précédentes, caractérisé par le fait qu'au moins six doigts de serrage (9, 10) ou plus sont disposés les uns à côté des autres sur le pourtour, et que, pour des pourtours plus importants, il est choisi de préférence plus de doigts de serrage, en proportion de l'augmentation du pourtour.

20. Passe-fil à vis selon l'une des revendications précédentes, caractérisé par le fait qu'au moins une garniture de serrage est reliée d'un seul tenant au manchon fileté (2) ou au contre-manchon (3).

Fig. 1

Fig. 2

Fig. 3

Fig. 4

Fig. 5

Fig. 6

Fig. 7

Fig. 8

Fig. 9

Fig. 10

Fig. 11